# EUROPÄISCHE PATENTANMELDUNG

(11) **EP 1 921 375 A2**
(43) Veröffentlichungstag der Anmeldung: **14.05.2008**
(21) Anmeldenummer: 07020560.4
(22) Anmeldetag: 20.10.2007
(51) Int. Cl.: F23C 6/04, F23D 1/00, F23G 5/04, F23G 5/08, F23G 7/10

(54) **Verfahren und Anordnung zur Mitverbrennung von Biomassen und/oder organischen Abfällen als Sekundärbrennstoff in einer Kohlenstaubfeuerung**

(30) Priorität: 10.11.2006 DE 102006053337
(71) Anmelder: RWE Power Aktiengesellschaft, 45128 Essen (DE)
(72) Erfinder: Hauk, Rolf, 59423 Unna (DE)
(74) Vertreter: Polypatent

(57) **Zusammenfassung**

Die Erfindung betrifft ein Verfahren und eine Anordnung zum Mitverbrennen von Biomassen und/oder organischen Abfällen als Sekundärbrennstoff in einem Kohlenstaubbefeuerten Kessel eines Dampferzeugers. Der Sekundärbrennstoff wird direkt oder indirekt mit dem Rauchgas des Kessels getrocknet. Der bei der Trocknung anfallende Brüden wird der Brennkammer des Kessels als Ausbrandluft und/oder Sekundärluft zugeführt.

## Beschreibung

Die Erfindung betrifft ein Verfahren und eine Anordnung zur Mitverbrennung von Biomassen und/oder organischen Abfällen als Sekundärbrennstoff in einer Kohlenstaubfeuerung.

Ein solches Verfahren ist beispielsweise aus der DE 196 49 986 A1 bekannt. Bei dem in der DE 196 49 986 beschriebenen Verfahren wird Klärschlamm als Suspension tangential in eine Zyklonbrennkammer eingebracht und auf einer Spiralbahn mit einem Wärmeträgermittel aufgetrocknet sowie entgast. Das so erzeugte Brenngas, der Brüden sowie die entgasten Klärschlammfeinstäube werden der Brennkammer und/oder der Rauchgasrücksaugung und/oder einem Einblasbrenner aufgegeben. Die entgasten Klärschlammgrobstäube werden durch Zentrifugalwirkung aus der Zyklonbrennkammer abgeschieden und der Kohlenstoffmühle und/oder der Kohlenstoffbrennerleitung zugeteilt.

Dieses Verfahren ist energietechnisch verhältnismäßig aufwändig, zumal die Zyklonbrennkammer mittels eines Öl- oder Gasbrenners betrieben wird.

Aus der DE 101 56 616 A1 ist ein Verfahren zur Mitverbrennung von Klärschlamm in einem Wirbelschichtkessel mit stationärer oder schwach expandierender Wirbelschicht bekannt, wobei mechanisch entwässerter, pumpbarer Klärschlamm in der Wirbelbrennkammer des Wirbelschichtkessels unmittelbar oberhalb des Wirbelbetts auf dasselbe an mehreren Stellen über den Umfang der Wirbelbrennkammer mittels Eintragslanzen aufgegeben wird und wobei der Eintrag jeweils mittels Druckluft derart erfolgt, so dass eine Streuung des Klärschlamms über das Wirbelbett erzielt wird. Bei dem in der DE 101 56 616 beschriebenen Verfahren wird der in das Wirbelbett eingebrachte Klärschlamm von dem Wirbelbett mitgetragen, mit dem Wirbelbettmaterial durchmischt und schließlich mit diesem mitverbrannt.

Eine solche direkte Einbringung des Klärschlamms in den Feuerraum eines Kessels ohne vorherige Behandlung, wie diese beispielsweise in der DE 196 49 986 beschrieben ist, ist nur bei einer Wirbelschichtfeuerung möglich.

Organische Massen, die in einen staubbefeuerten Kessel eingebracht werden sollen, bedürfen je nach Feuchtigkeitsgehalt der Vortrocknung. Das trifft auf mechanisch entwässerte Klärschlämme in jedem Falle zu.

Bei Kohlekraftwerken mit Staubfeuerung werden zunehmend Biomassen und Abfälle eingesetzt, die einen verhältnismäßig hohen Wassergehalt haben.

Die DE 196 49 986 A1 setzt bereits die direkte Zuteilung von feuchten Biomassen an Kohlenstaubmühlen als bekannt voraus. In der Tat werden zunehmend feuchte Biomassen und Abfälle direkt den Kohlenmühlen zugeteilt. Bei direkter Zuführung zu den Kohlenmühlen kann nur eine begrenzte Menge eingesetzt werden, da die Trocknungsreserven der Mühlen begrenzt sind und meistens die Kohlenmühlen auch für die Zerkleinerung feuchter, faseriger Substanzen nicht geeignet sind. Je nach verwendeten Biomassen, beispielsweise bei feuchtem Holz, ist eine Trocknung vor einer Feinzerkleinerung notwendig. Eine gewisse Korngröße der einzusetzenden Biomassen darf wegen einer möglichen Beeinträchtigung der Staubfeuerung nicht überschritten werden.

Bisherige Verfahren zur Mitverbrennung von Biomassen und anderen organischen Abfällen in Kohlenstaubfeuerungen sehen daher, wie dies auch in der DE 196 49 986 beschrieben ist, eine Trocknung mit Erdgas oder Erdöl vor. Dies ist mit verhältnismäßig hohen Energiekosten verbunden.

Aus der Trocknung von Braunkohle vor deren Verbrennung ist es bekannt, die für den Trockner benötigte Energie aus dem Wasser-Dampf-Kreislauf des Kraftwerkprozesses abzuzweigen. Dies ist mit einem verhältnismäßig hohen apparativen Aufwand verbunden, der bei der Trocknung von Biomassen und sonstigen organischen Abfällen in keinem Verhältnis zur erzielbaren Energieausbeute steht.

In jedem Falle ist die Nachbehandlung der Trocknerbrüden aufwändig. Bei Kondensation der Trocknerbrüden ist unter Umständen eine Abwasseraufbereitung erforderlich.

Der Erfindung liegt daher die Aufgabe zugrunde, ein Verfahren und eine Anordnung zur Mitverbrennung von Biomassen und/oder organischen Abfällen in einer Kohlenstaubfeuerung bereitzustellen, mit welchen die vorgenannten Probleme vermieden werden.

Zur Lösung des der Erfindung zugrunde liegenden Problems wird ein Verfahren zum Mitverbrennen von Biomassen und/oder organischen Abfällen als Sekundärbrennstoff in einem mit körniger und/oder staubförmiger Kohle als Brennstoff befeuerten Kessel eines Dampferzeugers vorgeschlagen, wobei der Sekundärbrennstoff direkt oder indirekt mit dem Rauchgas des Kessels getrocknet wird und wobei der Brüden aus der Trocknung des Sekundärbrennstoffs der dem Kessel zugeführten Verbrennungsluft zugegeben wird.

Ein Vorzug dieser Verfahrenweise ist darin zu sehen, dass eine Kondensation des Brüdens mit einer nachgeschalteten Abwasseraufbereitung und ggf. damit einhergehender Geruchsbelästigung nicht erforderlich sind.

Bei einer bevorzugten Variante des Verfahrens, bei welchem die Verbrennungsluft dem Kessel gestuft über mehrere-Ebenen zugegeben wird, ist vorgesehen, dass der Brüden zumindest teilweise in der in Strömungsrichtung des Rauchgases stromabwärts letzten Verbrennungsluftebene zugegeben wird.

Anders beschrieben beinhaltet das Verfahren gemäß der Erfindung die Mitverbrennung von feuchten Biomassen und organischen Abfällen als Sekundärbrennstoff in einer Kohlestaubfeuerung, wobei der Sekundärbrennstoff vorgetrocknet wird, die zur Trocknung benötigte Energie unmittelbar aus dem Rauchgasstrom ausgekoppelt wird und der bei der Trocknung anfallende Brüden - hauptsächlich Wasserdampf - noch im Kessel in Strömungsrichtung des Rauchgases stromaufwärts vor den Nachschaltheizflächen dem Rauchgas wieder zugegeben wird. Der getrocknete Sekundärbrennstoff kann den Kohlemühlen zugeteilt werden, und mit der Primärluft in den Kessel eingetragen werden.

Solche Kohlemühlen können beispielsweise als bekannte Walzenschüsselmühlen ausgebildet sein, in denen die Energie des Rauchgases zur Vortrocknung des Mahlgutes und das Rauchgas zum Transport des Mahlgutes genutzt werden.

Zweckmäßigerweise erfolgt die Zugabe des Brüdens zur Verbrennungsluft in Abhängigkeit des Leistungsbedarfs des Trockners für den Sekundärbrennstoff, derart, dass ggf. eine Teilmenge des Brüdens der stromaufwärts gelegenen nächsten Verbrennungsebene zugegeben wird. Zweckmäßigerweise entspricht die für den Trockner des Sekundärbrennstoffs benötigte Luftmenge der Auslegungsmenge für die stromabwärts letzte Verbrennungsluftebene. Ist der Leistungsbedarf des Trockners für den Sekundärbrennstoff höher als die in der stromabwärts letzten Verbrennungsluftebene benötigte Luft, beispielsweise in Form von Ausbrandluft, kann eine kaskadenartige Verteilung des Brüdens in Richtung auf die stromaufwärts gelegenen nächsten Verbrennungsluftebenen erfolgen.

Bei einem bevorzugten Ausführungsbeispiel des Verfahrens gemäß der Erfindung wird die für den Trockner des Sekundärbrennstoffs benötigte Energie hinter einem Luftvorwärmer aus dem Rauchgasstrom ausgekoppelt.

-Zweckmäßigerweise wird dabei eine Teilmenge des Luftstroms hinter dem Luftvorwärmer zur Trocknung des Sekundärbrennstoffs abgezweigt. Eine andere Teilmenge des Luftstroms hinter dem Luftvorwärmer kann als Primär- und/oder Sekundärluft dem Kessel zugeführt werden.

Die hinter dem Luftvorwärmer abgezweigte Primärluft wird zweckmäßigerweise über wenigstens eine Kohlemühle dem Kessel zugeführt. Dort wird deren Energie zur Trocknung des Primärbrennstoffs verwendet.

Bei einer bevorzugten Variante des Verfahrens gemäß der Erfindung wird in der stromabwärts letzten Verbrennungsluftebene Ausbrandluft zugegeben. Als Ausbrandluft kann vollständig der Brüden des Trockners zugeführt werden. Bei einer gestuften Verbrennungsluftzuführung ohne die Zugabe von Ausbrandluft kann der Brüden als Sekundärluft dem Kessel zugeführt werden.

Vorzugsweise wird in dem Trockner für den Sekundärbrennstoff eine direkte Trocknung im Luftstrom durchgeführt.

Alternativ hierzu ist es möglich, dass in dem Trockner für den Sekundärbrennstoff eine indirekte Trocknung erfolgt.

Dem Trockner nachgeschaltet kann eine Verdichtung und Entstaubung des Brüdens vorgesehen sein. Die Verdichtung dient in diesem Falle dazu, die Druckverluste des Trockners auszugleichen.

Die der Erfindung zugrunde liegende Aufgabe wird weiterhin gelöst durch eine Anordnung zur Mitverbrennung von Biomassen und/oder organischen Abfällen als Sekundärbrennstoff in einer Kohlenstaubfeuerung, umfassend wenigstens einen Trockner für den Sekundärbrennstoff, wobei der Trockner einem Luftvorwärmer zur Konditionierung von Verbrennungsluft und/oder Mühlenluft nachgeschaltet ist und wobei der Brüdenabgang des Trockners an die Ausbrandluftzufuhr und/oder Sekundärluftzufuhr des Kessels angeschlossen ist.

Die Erfindung wird nachstehend anhand dreier in den Zeichnungen dargestellter Ausführungsbeispiele erläutert.

Es zeigen:
Figur 1 eine Anordnung eines staubgefeuerten Kessels mit Luftvorwärmer und Trockner für Sekundärbrennstoff nach einem ersten Ausführungsbeispiel der Erfindung,
Figur 2 eine schematische Darstellung einer gegenüber dem in Figur 1 dargestellten Ausführungsbeispiel modifizierten Verfahrensführung nach einem zweiten Ausführungsbeispiel der Erfindung und
Figur 3 eine schematische Darstellung eines dritten Ausführungsbeispiels der Erfindung.

Das in den Zeichnungen dargestellte Ausführungsbeispiel zeigt einen staubbefeuerten Kessel 1, der beispielsweise mit Steinkohle als Primärbrennstoff betrieben wird. Mit welcher Kohle der Kessel 1 betrieben wird, ist letztendlich für die Erfindung nicht kritisch, dieser kann ebenso mit Braunkohle befeuert sein.

Von dem Kessel 1 ist nur die Brennkammer dargestellt, der obere Bereich des Kessels 1 mit den Nachschaltheizflächen ist der Einfachheit halber in dem Fließbild nicht dargestellt. Der Kessel 1 ist als Kessel mit gestufter Verbrennungsluftzufuhr ausgebildet. Die einzelnen Verbrennungsluftebenen sind mit den Bezugszeichen 2 bis 6 versehen, wobei die unterste Verbrennungsluftebene 2 die Falschluftzufuhr zur Brennkammer darstellt, die darauf folgende Verbrennungsluftebene 3 die Primärluftzufuhr darstellt, die dieser nachgeschaltete Verbrennungsluftebene 4 die Sekundärluftzufuhr darstellt, die dieser stromabwärts des Rauchgases angrenzende Verbrennungsluftebene 5 die Oberluftzufuhr darstellt und die stromabwärts letzte Verbrennungsluftebene 6 die Ausbrandluftebene darstellt. Mit 7 ist der Rauchgasstrom aus der Brennkammer beziehungsweise aus dem Kessel 1 bezeichnet.

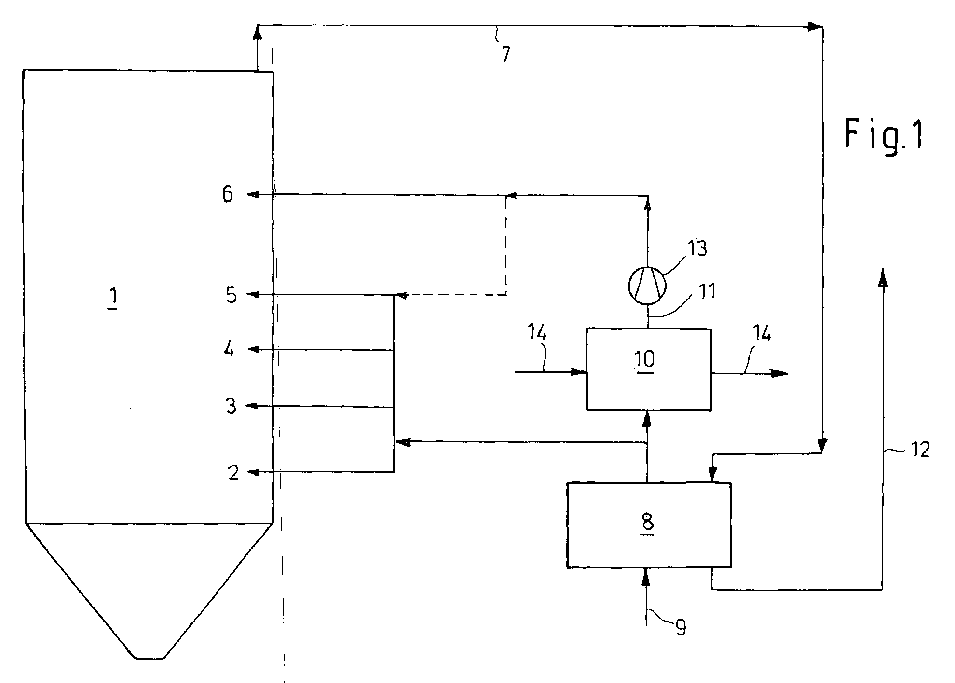

Wie insbesondere der Figur 1 zu entnehmen ist, wird der Rauchgasstrom über einen als Drehluftvorwärmer ausgebildeten Luftvorwärmer 8 nachstehend als Luvo bezeichnet - geführt. Der Luvo 8 ist in bekannter Art und Weise an eine Frischluftzufuhr 9 angeschlossen. Die Frischluft wird in dem Luvo 8 direkt oder indirekt mit Rauchgas von beispielsweise 35 °C auf etwa 350°C aufgeheizt. Mit etwa 350°C durchströmt die aufgeheizte Luft den Trockner 10 in dem Biomassen in Form von beispielsweise feuchten Holzspänen oder dergleichen in direktem Kontakt mit der aufgeheizten Luft getrocknet werden.

Der Brüdenabgang 11 des Trockners 10 ist an die Brennkammer des Kessels 1 unmittelbar angeschlossen. Bei dem beschriebenen Ausführungsbeispiel werden 100% des Brüdens dem Kessel 1 als Ausbrandluft 6 zugeführt. Das aus dem Trockner abgezogene getrocknete Gut wird den nicht dargestellten Kohlemühlen zugeteilt, die in der Primärluftzufuhr 3 zur Brennkammer angeordnet sind.

Alternativ können die Biomassen hinter dem Trockner 10 in einer separaten Mühle gemahlen und nach der Mahlung separat oder gemeinsam mit der Kohle in den Kessel eingeblasen werden.

Nach einer weiteren Variante kann vorgesehen sein, die Biomasse vor der Trocknung in einer separaten Mühle zu vermahlen. Schließlich können die Biomassen bereits in zerkleinerter Form vorliegen, sodass eine zusätzliche Aufmahlung entbehrlich ist.

Ob eine separate Aufmahlung der Biomassen ggf. vor oder nach dem Trocknen erforderlich ist, ist vorwiegend eine Frage der physikalischen Eigenschaften der Biomasse in Hinblick auf die Mahlbarkeit.

Bei Einblasung der Biomassen gemeinsam mit der Kohle bietet sich an, diese den Kohlemühlen zuzuteilen, in welchen eine intensive Durchmischung von Biomasse und Kohle und ggf. eine Nachvermahlung der Biomasse erzielt wird.

Hinter dem Luvo 8 und vor dem Trockner 10 wird aufgeheizte Luft in bekannter Art und Weise über die Verbrennungsluftebenen der Brennkammer des Kessels 1 verteilt, wobei die Primärluftzufuhr 3 in bekannter Art und Weise über eine oder mehrere Kohlemühlen geführt wird, die nicht dargestellt sind.

Die Regelung sieht vor, dass bei erhöhtem Leistungsbedarf des Trockners 10 eine Teilmenge des Brüdens kaskadenartig der Oberluft 5 und ggf. auch der Sekundärluft 4 zugegeben wird.

Über die Ausbrandluftzufuhr 6 und/oder die Oberluftzufuhr 5 und/oder die Sekundärluftzufuhr 4 gelangt der Brüden aus dem Trockner 10 in den Rauchgasstrom 7 und schlussendlich in den Rauchgasabgang 12. Zum Ausgleich etwaiger Druckverluste des Trockners 10 ist dem Trockner 10 ein Brüdenverdichter 13 nachgeschaltet. Dem Brüdenverdichter 13 kann im Bedarfsfall noch ein Filter nachgeschaltet sein, ein solches Filter ist in der vereinfachten Darstellung des Verfahrensablaufs nicht eingezeichnet.

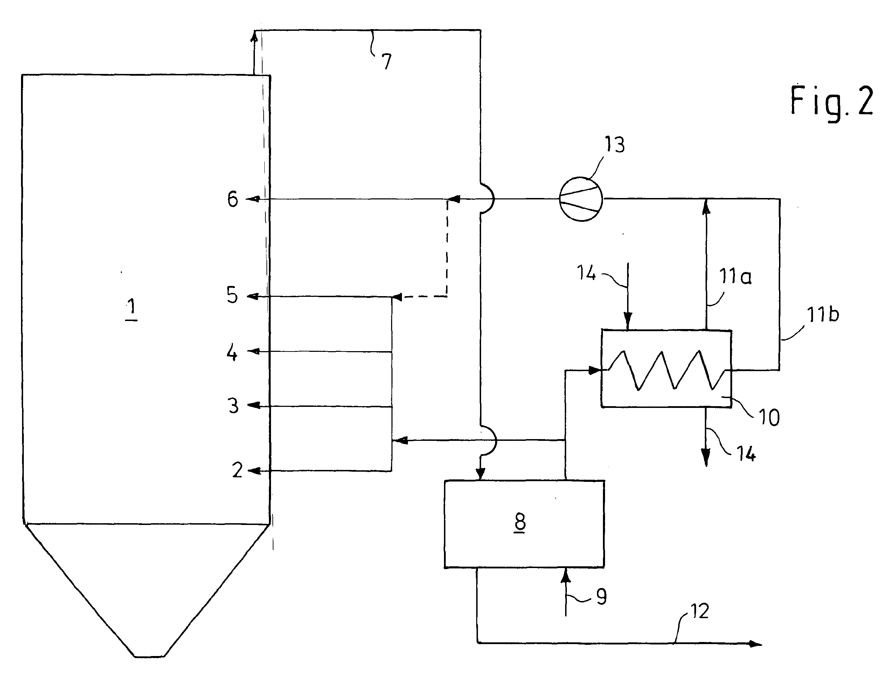

Das in Figur 2 dargestellte Ausführungsbeispiel entspricht in etwa demjenigen aus Figur 1 mit dem Unterschied, dass der Trockner 10 als indirekter Trockner ausgebildet ist und zwei separate Abgänge 11 a, 11 b aufweist, wobei der Abgang 11 a als Brüdenabgang dient, der Abgang 11 b hingegen das abgekühlte Wärmetauschermedium des Trockners 10 führt. Die Abgänge 11a und 11 b sind vor dem Brüdenverdichter13 wieder zusammengeführt.

Im übrigen sind in den verschiedenen Figuren gleiche Teile mit gleichen Bezugszeichen versehen.

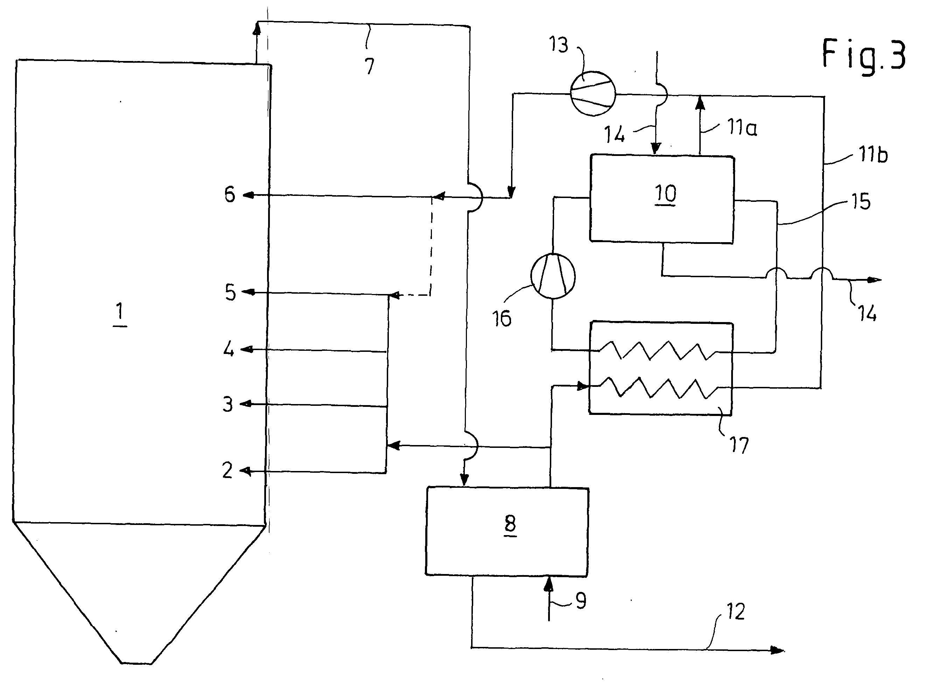

Dies trifft auch auf das in Figur 3 dargestellte Ausführungsbeispiel zu, das sich in soweit von den vorhergehenden Ausführungsbeispielen unterscheidet, als das der Trockner 10 als indirekter Trockner ausgebildet ist, der jedoch einen separaten Kreislauf 15 für das Wärmetauschermedium aufweist. Dieser Wärmetauscherkreislauf 15 ist in sich geschlossen. In diesem ist ein Verdichter 16 vorgesehen, um den Umtrieb des Wärmetauschermediums zu bewirken.

Zur Aufheizung des Wärmetauschermediums ist ein Wärmetauscher 17 vorgesehen, dessen Abgang 11 b hinter dem Trockner 10 mit dem Brüdenabgang 11a des Trockners 10 vereinigt wird.

Bei dem in Figur 2 beschriebenen Ausführungsbeispiel könnte beispielsweise der Trockner 10 als Wirbelschichttrockner mit innenliegenden Heizflächen ausgebildet sein.

Bei dem in Figur 3 beschriebenen Ausführungsbeispiel könnte beispielsweise als Wärmetauschermedium Dampf, Stickstoff oder Rauchgas vorgesehen sein. Die abgekühlte Luft aus dem Abgang 11 b des Wärmetauschers 17 wird zusammen mit dem Brüden der Ausbrandluft zugegeben bzw. als Ausbrandluftzufuhr in die Brennkammer des Kessels 1 eingetragen.

### Bezugszeichenliste

- 1: Kessel
- 2: Falschluftzufuhr zur Brennkammer
- 3: Primärluftzufuhr zur Brennkammer
- 4: Sekundärluftzufuhr zur Brennkammer
- 5: Oberluftzufuhr zur Brennkammer
- 6: Ausbrandluftzufuhr zur Brennkammer
- 7: Rauchgasstrom
- 8: Luftvorwärmer
- 9: Frischluftzufuhr zum Luftvorwärmer
- 10: Trockner
- 11: Brüdenabgang
- 11a: Brüdenabgang
- 11 b: Trocknerabgang/Wärmetauscherabgang
- 12: Rauchgasabgang
- 13: Brüdenverdichter
- 14: Sekundärbrennstoffstrom
- 15: Wärmetauscherkreislauf
- 16: Verdichter
- 17: Wärmetauscher

## Patentansprüche

1. Verfahren zum Mitverbrennen von Biomassen und/oder organischen Abfällen als Sekundärbrennstoff in einem mit körniger und/oder staubförmiger Kohle als Primärbrennstoff befeuerten Kessel eines Dampferzeugers, wobei der Sekundärbrennstoff direkt oder indirekt mit dem Rauchgas des Kessels getrocknet wird und wobei der Brüden aus der Trocknung des Sekundärbrennstoffs der dem Kessel zugeführten Verbrennungsluft zugeführt wird.

2. Verfahren nach Anspruch 1, bei welchem die Verbrennungsluft dem Kessel gestuft über mehrere Ebenen zugegeben wird, **dadurch gekennzeichnet, dass** der Brüden zumindest teilweise in der in Strömungsrichtung des Rauchgases stromabwärts letzten Verbrennungsluftebene zugegeben wird.

3. Verfahren nach einem der Ansprüche 1 oder 2, **dadurch gekennzeichnet, dass** die Zugabe des Brüdens zur Verbrennungsluft in Abhängigkeit des Leistungsbedarfs des Trockners für den Sekundärbrennstoff geregelt wird, derart, dass ggf. auch eine Teilmenge des Brüdens der stromaufwärts des Rauchgas gelegenen nächsten Verbrennungsluftebene zugegeben wird.

4. Verfahren nach einem der Ansprüche 2 oder 3, **dadurch gekennzeichnet, dass** die für den Trockner des Sekundärbrennstoffs benötigte Luftmenge der Auslegungsmenge für die stromabwärts letzte Verbrennungsluftebene entspricht.

5. Verfahren nach einem der Ansprüche 1-4, **dadurch gekennzeichnet, dass** die für den Trockner des Sekundärbrennstoffs benötigte Energie hinter einem Luftvorwärmer aus dem Rauchgasstrom ausgekoppelt wird.

6. Verfahren nach Anspruch 5, **dadurch gekennzeichnet, dass** eine Teilmenge des Luftstroms hinter dem Luftvorwärmer zur Trocknung des Sekundärbrennstoffs abgezweigt wird.

7. Verfahren nach einem der Ansprüche 5 oder 6, **dadurch gekennzeichnet, dass** eine Teilmenge des Luftstroms hinter dem Luftvorwärmer als Primär-und Sekundärluft dem Kessel zugeführt wird.

8. Verfahren nach Anspruch 7, **dadurch gekennzeichnet, dass** die hinter dem Luftvorwärmer abgezweigte Primärluft über wenigstens eine Kohlemühle dem Kessel zugeführt wird.

9. Verfahren nach einem der Ansprüche 2 bis 8, **dadurch gekennzeichnet, dass** der stromabwärts letzten Verbrennungsluftebene Ausbrandluft zugegeben wird.

10. Verfahren nach einem der Ansprüche 1 bis 9, **dadurch gekennzeichnet, dass** in dem Trockner für den Sekundärbrennstoff eine direkte Trocknung im Luftstrom erfolgt.

11. Verfahren nach einem der Ansprüche 1 bis 9, **dadurch gekennzeichnet, dass** in dem Trockner für den Sekundärbrennstoff eine indirekte Trocknung erfolgt.

12. Anordnung zur Mitverbrennung von Biomassen und/oder organischen Abfällen als Sekundärbrennstoff in einer Kohlenstaubfeuerung, umfassend wenigstens einen Trockner für den Sekundärbrennstoff, wobei der Trockner einem Luftvorwärmer zur Konditionierung von Verbrennungsluft und/oder Mühlenluft nachgeschaltet ist und wobei der Brüdenabgang des Trockners an die Ausbrandluftzufuhr und/oder Sekundärluftzufuhr des Kessels angeschlossen ist.
